# DEMANDE DE BREVET EUROPEEN

(11) **EP 4 220 877 A1**
(43) Date de publication de la demande: **02.08.2023**
(21) Numéro de dépôt: 23153288.8
(22) Date de dépôt: 25.01.2023
(51) Int. Cl.: H02G 1/06, B65D 83/08, B65D 85/04, B65H 49/38, B65H 75/14

(54) **DISPOSITIF DE STOCKAGE, TRANSPORT ET INSTALLATION DE FILS ET CÂBLES ÉLECTRIQUES**

(30) Priorité: 27.01.2022 FR 2200714
(71) Demandeur: Nexans, 92400 Courbevoie (FR)
(72) Inventeur: DEMULE, Christophe, 71190 LAIZY (FR); BRIN, Julien, 69720 SAINT BONNET DE MURE (FR); SIMON, Thibaud, 69006 LYON (FR); DELWAL, Fabien, 01320 CHALAMONT (FR)
(74) Mandataire: Ipsilon

(57) **Abrégé**

Ce dispositif (10) de stockage, transport et installation de fils ou câbles électriques (12) comporte : un boîtier (14) cylindrique, traversé par un arbre de rotation coaxial à l'axe de symétrie du boîtier (14) cylindrique et contenant une bobine de fil ou câble électrique (12) fixée à l'arbre de rotation ; deux joues (18) de diamètre supérieur au diamètre du boîtier (14), disposées respectivement à chaque extrémité du boîtier (14), solidaires de l'arbre de rotation et mobiles en rotation avec l'arbre de rotation ; au moins une poignée (20, 22) de transport.

## Description

La présente invention se rapporte à un dispositif de stockage, transport et installation de fils et câbles électriques.

L'invention appartient au domaine des équipements pour fils électriques et câbles électriques dans des secteurs variés, tels le bâtiment ou l'industrie.

Pour l'installateur, les fils ou câbles électriques se présentent souvent sous forme d'une bobine emballée dans un film plastique. Cela présente divers inconvénients tout au long du transport, de l'installation et de l'utilisation de ces fils ou câbles.

En effet, typiquement, lors du transport de la bobine du camion vers le site d'installation, l'installateur a généralement déjà en main d'autres objets tels qu'une boîte à outils, une échelle, etc. et n'a donc que peu de disponibilité pour le transport de la bobine.

Puis au moment de l'installation, il est souvent difficile de dérouler le fil ou câble, car la bobine a tendance à se déplacer sur le sol.

En outre, ce type d'emballage produit généralement un entortillement du fil ou câble car celui-ci est déroulé à partir de l'intérieur de la bobine.

Par ailleurs, si l'installateur a besoin d'installer simultanément deux, voire trois fils ou câbles, il rencontre une difficulté supplémentaire étant donné que ces deux, voire trois bobines sont emballées séparément.

De plus, une fois l'installation terminée, il reste souvent du fil ou câble dans les emballages. Il n'est pas aisé de contenir ce restant de fil ou câble à l'intérieur de l'emballage ouvert, ni de le transporter.

La présente invention a pour but de remédier aux inconvénients précités de l'art antérieur.

Dans ce but, la présente invention propose un dispositif de stockage, transport et installation de fils ou câbles électriques, remarquable en ce qu'il comporte :
un boîtier cylindrique, traversé par un arbre de rotation coaxial à l'axe de symétrie du boîtier cylindrique et contenant une bobine de fil ou câble électrique fixée à l'arbre de rotation ;
deux joues de diamètre supérieur au diamètre du boîtier, disposées respectivement à chaque extrémité du boîtier, solidaires de l'arbre de rotation et
mobiles en rotation avec l'arbre de rotation ;
au moins une poignée de transport.

Ainsi, la présente invention couvre, sous une forme compacte et très simple d'utilisation, l'ensemble des fonctionnalités de stockage, de transport et d'installation de fils ou câbles électriques. Elle facilite le transport d'une bobine, par roulage des joues sur le sol, offre un gain de temps lors de l'installation, une réduction des risques liés à la manutention, une limitation du taux de rebut et présente une empreinte environnementale réduite grâce au caractère durable de la solution de transport et de stockage et à la collecte facilitée des déchets.

Dans un mode particulier de réalisation, le boîtier comporte au moins une fente suivant une direction parallèle à l'arbre de rotation et adaptée au passage du fil ou câble électrique.

Cela permet de dérouler facilement le fil ou câble à partir de l'extérieur de la bobine et d'éviter ainsi l'entortillement du fil ou câble.

Dans un mode particulier de réalisation, le dispositif comporte une première poignée de transport fixée sur une des joues et une seconde poignée de transport fixée sur le boîtier.

Cela permet à l'installateur de porter le dispositif soit à la main grâce à la première poignée, soit en bandoulière sur l'épaule grâce à la seconde poignée, soit encore en le faisant rouler sur le sol et en le tirant.

Dans un mode particulier de réalisation, la bobine de fil ou câble électrique comporte un cylindre central en carton autour duquel est enroulé le fil ou câble électrique, le cylindre central étant fermé à chacune de ses extrémités par une joue en carton de même diamètre que le cylindre central, chacune des joues en carton présentant un évidement ayant une forme géométrique prédéterminée complémentaire de la forme géométrique de la section de l'arbre de rotation.

Le carton confère au dispositif une empreinte environnementale réduite et l'évidement dans chaque joue permet la fixation de façon très simple de la bobine de fil ou câble électrique sur l'arbre de rotation, sans pièce supplémentaire ni outil.

Dans un mode particulier de réalisation, la bobine de fil ou câble électrique est entourée sur sa circonférence d'une feuille de papier kraft.

Ainsi, la bobine est emballée sans plastique et présente donc une empreinte carbone réduite.

Selon une caractéristique particulière possible, la feuille de papier kraft présente une ouverture adaptée au passage du fil ou câble électrique.

Cela permet de dérouler le fil ou câble électrique sans avoir besoin de déballer la bobine de sa feuille de papier kraft.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig. 1] est une représentation schématique d'un dispositif conforme à la présente invention, dans un mode particulier de réalisation ;
[Fig. 2] est une représentation schématique d'une bobine de fil ou câble électrique du type contenu dans un dispositif conforme à la présente invention, dans un mode particulier de réalisation.

### Description de mode(s) de réalisation

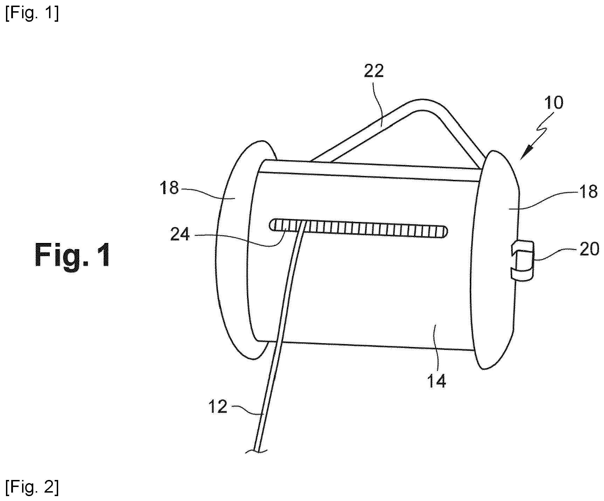

Comme le montre la figure 1, dans un mode particulier de réalisation, un dispositif 10 de stockage, transport et installation de fils ou câbles électriques conforme à la présente invention comporte un boîtier 14 cylindrique. Le boîtier 14 est traversé par un arbre de rotation (non représenté) coaxial à l'axe de symétrie du boîtier 14.

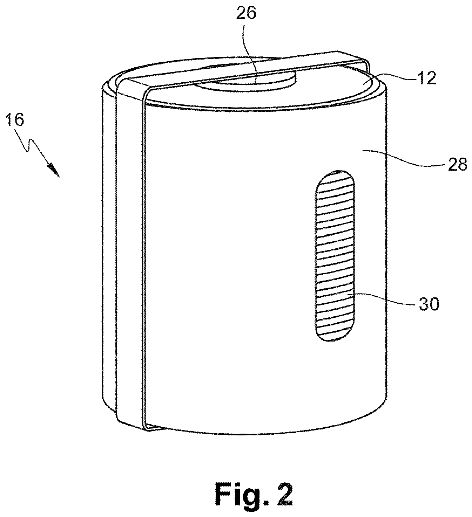

Le boîtier 14 contient une bobine 16 sur laquelle est enroulé un fil ou un câble 12 électrique. La bobine 16 est fixée à l'arbre de rotation, par exemple comme décrit plus loin en référence à la figure 2.

Le dispositif 10 comporte en outre deux joues ou flasques 18 ayant la forme d'un disque, disposées respectivement à chacune des extrémités du boîtier 14 et présentant un diamètre supérieur à celui du boîtier 14 cylindrique. Les joues 18 sont solidaires de l'arbre de rotation qui traverse le boîtier 14 et sont mobiles en rotation avec l'arbre de rotation, de sorte que lorsque le dispositif 10 est placé sur le sol avec l'axe de symétrie du boîtier 14 cylindrique parallèle au sol, le dispositif 10 repose sur la circonférence des joues 18, qui peuvent rouler sur le sol.

Afin de pouvoir introduire la bobine 16 dans le boîtier 14, au moins une des joues 18 est amovible.

Comme le montre la figure 2, de façon optionnelle, la bobine 16 peut être entourée sur sa circonférence d'une feuille de papier kraft 28, qui constitue son emballage et sur laquelle on peut porter toute indication se rapportant à l'identification du fil ou câble 12 électrique (référence, couleur, section, longueur, etc.).

Afin de pouvoir aisément dérouler le fil ou câble 12 électrique enroulé sur la bobine 16, la bande de papier kraft 28 peut présenter une ou plusieurs ouvertures 30 adaptées au passage du fil ou câble 12 électrique. A titre d'exemple non limitatif, dans le mode particulier de réalisation illustré sur la figure 2, l'ouverture 30 est de forme oblongue.

Le dispositif 10 comporte en outre une ou plusieurs poignées permettant la saisie et le transport du dispositif 10. Dans le mode particulier de réalisation illustré sur la figure 1, le dispositif 10 comporte une première poignée 20 de transport fixée sur une des joues 18 et une seconde poignée 22 de transport fixée sur le boîtier 14.

On peut prévoir par exemple que la première poignée 20 de transport soit rigide, pour une bonne prise en main et que la seconde poignée 22 de transport soit du type bandoulière souple, de longueur éventuellement réglable, pour un transport du dispositif 10, soit en plaçant le dispositif 10 sur le sol, en le faisant rouler et en le tirant par la seconde poignée 22 de transport, soit en plaçant la seconde poignée 22 de transport sur l'épaule de façon à porter le dispositif 10, soit en portant le dispositif 10 à la main, par la première poignée 20 de transport.

De façon optionnelle, le boîtier 14 peut présenter sur sa circonférence une ou plusieurs ouvertures adaptées au passage du fil ou câble 12 électrique, permettant donc de dérouler celui-ci à l'extérieur de la bobine 16 et faisant à la fois fonction de passe-fil et de guide-fil.

Dans le mode particulier de réalisation de la figure 1, le boîtier 14 présente sur sa circonférence une ouverture en forme de fente 24 s'étendant suivant une direction parallèle à l'arbre de rotation. La largeur de la fente 24 sera choisie de façon à être légèrement supérieure à la section du fil ou câble 12 électrique.

La figure 2 montre un mode particulier de réalisation de la bobine 16. Elle comporte un cylindre central 26 en carton, autour duquel est enroulé le fil ou câble 12 électrique.

Le cylindre central 26 est fermé à chacune de ses extrémités par une joue en carton de même diamètre que le cylindre central 26. Chacune des deux joues en carton présente en son centre un évidement ayant une forme géométrique prédéterminée (circulaire, rectangulaire, triangulaire, en croix, etc.) complémentaire de la forme géométrique de la section de l'arbre de rotation. L'arbre de rotation qui traverse le boîtier 14 vient s'insérer dans le cylindre central 26 de la bobine 16 par l'évidement d'une des joues en carton et ressort du cylindre central 26 par l'évidement de l'autre joue en carton. La bobine est ainsi fixée sur l'arbre de rotation sans pièce supplémentaire ni outil.

Avantageusement, pour permettre à l'installateur de connaître la longueur restante de fil ou câble 12 électrique sur la bobine 16 sans avoir besoin d'accéder à l'intérieur du boîtier 14 et quelle que soit la section du fil ou câble 12 électrique, on peut prévoir un outil sous forme d'une règle, où se lit la correspondance entre la section, la masse de la section et le nombre de mètres restant sur la bobine 16.

## Revendications

1. Dispositif (10) de stockage, transport et installation de fils ou câbles électriques (12), **caractérisé en ce qu'**il comporte :
un boîtier (14) cylindrique, traversé par un arbre de rotation coaxial à l'axe de symétrie dudit boîtier (14) cylindrique et contenant une bobine (16) de fil ou câble électrique (12) fixée audit arbre de rotation ;
deux joues (18) de diamètre supérieur au diamètre dudit boîtier (14),
disposées respectivement à chaque extrémité dudit boîtier (14), solidaires dudit arbre de rotation et mobiles en rotation avec ledit arbre de rotation ;
au moins une poignée (20, 22) de transport.

2. Dispositif (10) selon la revendication 1, **caractérisé en ce que** ledit boîtier (14) comporte au moins une fente (24) suivant une direction parallèle audit arbre de rotation et adaptée au passage dudit fil ou câble électrique (12).

3. Dispositif (10) selon la revendication 1 ou 2, **caractérisé en ce qu'**il comporte une première poignée (20) de transport fixée sur une desdites joues (18) et une seconde poignée (22) de transport fixée sur ledit boîtier (14).

4. Dispositif (10) selon la revendication 1, 2 ou 3, **caractérisé en ce que** ladite bobine (16) de fil ou câble électrique (12) comporte un cylindre central (26) en carton autour duquel est enroulé ledit fil ou câble électrique (12), ledit cylindre central (26) étant fermé à chacune de ses extrémités par une joue en carton de même diamètre que ledit cylindre central (26), chacune desdites joues en carton présentant un évidement ayant une forme géométrique prédéterminée complémentaire de la forme géométrique de la section dudit arbre de rotation.

5. Dispositif (10) selon l'une quelconque des revendications précédentes, **caractérisé en ce que** ladite bobine (16) de fil ou câble électrique (12) est entourée sur sa circonférence d'une feuille de papier kraft (28).

6. Dispositif (10) selon la revendication 5, **caractérisé en ce que** ladite feuille de papier kraft (28) présente une ouverture (30) adaptée au passage dudit fil ou câble électrique (12).
